# EUROPEAN PATENT APPLICATION

(11) **EP 2 629 213 A1**
(43) Date of publication of application: **21.08.2013**
(21) Application number: 13153198.0
(22) Date of filing: 30.01.2013
(51) Int. Cl.: G06F 17/30

(54) **Method and system for associating user interests with zones and maps**

(30) Priority: 16.02.2012 US 201261599915 P
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

A user of a network system may be provided with geographical area information and may define geographical zones associated with his personal interests. This may allow a network server to provide said user with updated information relating to this particular geographical zone and the specified user interests. The invention is particularly effective to facilitate communication and contact among the members of a social network.

## Description

### FIELD OF THE INVENTION

The invention relates to methods and systems for associating user interests with geographical areas such as zones and maps, in particular for applications in social networks.

### BACKGROUND AND STATE OF THE ART

The advent of the Internet has provided a great impetus to social networking by allowing instant and efficient communication among friends and acquaintances. There is a trend for people to gather in Internet-based social networks to share common or related interests. For instance, such networks may be directed at people sharing a common profession, people living in the same city, or people playing a network computer game.

Concurrent with the trend towards social networking, mobile computing is becoming evermore widespread and important, in particular among users of social networks. Hence, there remains a need to facilitate the communication and coordination of mobile users of a social network.

### SUMMARY OF THE INVENTION

This need is addressed by a method and system for associating user interest with geographical areas according to the independent claims. The dependent claims relate to preferred embodiments.

A method for associating user interests with geographical areas according to the present invention comprises the steps of providing geographical area data to at least one user over a network, receiving from said user data relating to at least one geographical zone, said geographical zone defined or selected by said user from said geographical area data, receiving from said user interest data relating to said geographical zone, and associating said interest data with said geographical zone.

The method according to the present invention allows the user to define zone maps that represent geographical regions in which the user has a special interest. These may be geographical zones both in a real world or in a virtual world. For instance, a geographical area may be the user's home town, and geographical zones may be the vicinity of the user's home or workplace, or any other part of town that the user visits at regular intervals. Alternatively, the geographical area may be a virtual geographical area, such as the setting of a computer game that the user plays regularly, either alone or with friends over a network, and the geographical zone may be any zone in this virtual setting in which the user has a particular interest. The invention allows the user to define geographical zones from said geographical data, and to associate his special interests with these zones. This information can be employed to provide the user with relevant information and updates relating to these interests in the corresponding zone, or to share this information with other users over a network. This may allow the user to keep up-to-data, and may facilitate the contact with other users having similar interests.

Geographical area data may be provided to the user in terms of a map or set of maps, or in terms of a description of a geographical area provided to the user. The geographical zone may be a subset or plurality of subsets of said geographical area, or any description of said subset(s). The user may define said geographical zone by selecting said zone from among several proposals, by outlining an arbitrary region on a touchscreen, by providing geographical coordinates of the zone, or by providing any other suitable description of the zone.

Said user interest data may comprise any kind of data or information relating to an interest of said user, such as an interest in food or restaurants, fashion, or sports. Said special interest may likewise be an online game played over a social network, or any other kind of common interest of a social network or interest group. Said user may provide his interests over the network so that they may be centrally stored and associated with said geographical zone. This allows providing the user with regular updates relating to his designated interests in the designated geographical zone.

Said step of associating said interest data with said geographical zone may be any step of linking or relating said interest data with said geographical zone, such as for storage and/or processing.

In a preferred embodiment, said geographical zone may be defined by at least one circle and/or by at least one polygon. Said geographical zone may in general be defined as an interior or exterior of a boundary line, which may be any straight or curved line.

Said geographical zone may also be a street or a plurality of streets, possibly together with their vicinity. Said vicinity may comprise a predefined zone or area adjoining said street(s), or extending along said street(s).

Said geographical zone may also be a predefined quarter or neighborhood, either in a real world or in a virtual world.

In a preferred embodiment, the method comprises a step of providing selection means to said user, said selection means for allowing said user to define and/or select said geographical zone.

For instance, the user may be provided with a map of the geographical area and with selection means for selecting a desired region of a map, for example by drawing a boundary polygon or circle around the region of interest.

Said geographical zones may comprise a plurality of separate sub-zones. Said sub-zones may not be directly connected.

In a preferred embodiment, said step of receiving said interest data comprises a step of receiving points of interest located in said geographical zone. Said points of interest may be defined by said user and/or may be selected by said user, for instance by selection among a set of proposals provided from a server.

By designating said points of interest, said user may indicate locations for which he would like to receive update information. For instance, said points of interest may be a selection of restaurants located in the geographical zone, or a selection of shops in said geographical zone.

In a preferred embodiment, the method further comprises a step of receiving from said user temporal data relating to said geographical zone and/or to said interest data, and associating said temporal data with said geographical zone and/or with said interest data.

Said temporal data may be any temporal information relating to said geographical zone and/or to said interests. The temporal data may comprise a repeated occurrence, such as every day, only on Sundays, only from December to March, or one-time only. For instance, if the geographical zone is the vicinity of the user's workplace and the interest data relates to food, the user may choose to receive update information only at around lunchtime.

In a preferred embodiment, the method comprises a step of activating or deactivating said geographical zone in accordance with said temporal data. A zone that is activated may be a zone for which updated are provided to the user. If a zone is deactivated, updates may be withheld. This allows the user to be provided with updates relating to the selected zone only at the designated time settings.

In a preferred embodiment, the method further comprises a step of providing update data to said user. Said update information may be any information relating to said interest information and/or said geographical zone.

Said update data may be provided in accordance with temporal data.

Said update data may also be provided in accordance with a geographical position or location of said user and/or in accordance with the respective positions of further user connected via said network.

This embodiment may allow providing the user with update information when the user is found to be located within the geographical zone, or in the vicinity of said geographical zone. Said vicinity may be defined in terms of a predetermined distance to a selected point of interest, or to a boundary of said geographical zone. For instance, a user may be provided with updates whenever he enters said geographical zone. Accordingly, said user may also be provided with update information whenever a further user enters said geographical zone, or is found to be positioned in said geographical zone. Said further user may be a user with similar or corresponding interests. This allows the user to meet or coordinate with other users of the same network sharing the same interests.

Said method may comprise a step of detecting a position of said user and/or positions of further users connected to said server via said network.

In a preferred embodiment, the method further comprises a step of communicating data relating to said geographical zone and/or relating to said interest data to at least a further user connected via said network.

In a preferred embodiment, said method comprises the steps of providing first geographical area data to a first user over said network, receiving from said first user at least a first geographical zone, said first geographical zone defined or selected by said first user from said first geographical area data, receiving from said first user first interest data relating to said first geographical zone, and associating said first interest data with said first geographical zone. The method may further comprise the steps of providing second geographical area data to a second user over said network, receiving from said second user at least a second geographical zone, said second geographical zone defined or selected by said second user from said second geographical area data, receiving from said second user second interest data relating to said second geographical zone, associating said second interest data with said second geographical zone, and providing said second user with data pertaining to said first geographical zone and/or said first interest data.

Said second user may be provided with data pertaining to said first geographical zone and/or said first interest data in response to a request and/or instruction received from said first user or said second user.

Said second geographical area data may be identical with said first geographical area data. For instance, said first user and said second user may both be provided with identical maps or sets of maps.

Said first user may also be provided with data pertaining to said second geographical zone and/or said second interest information.

In a preferred embodiment, said network is a social network.

The embodiments as described above characterize the invention from the point of view of a service provider coordinating the users in the network. However, the invention may equally well be characterized from the perspective of a user connected to said network.

In this instance, the invention relates to a method for associating user interests with geographical areas, said method comprising the steps of receiving geographical area data from a server over a network, defining at least one geographical zone from said geographical area data, providing data relating to said geographical zone to said server, associating interest data with said geographical zone, and providing said interest data to said server.

In a preferred embodiment, said step of associating said interest data comprises a step of defining and/or selecting points of interest in said geographical zone.

Said method may further comprise a step of associating temporal data with said geographical zone and/or with said interest data.

According to a preferred embodiment, said method further comprises a step of receiving update data from said server, said update data relating to said interest data.

Said update data may be received in accordance with temporal data and/or in accordance with a position of said user and/or a position of further users connected to said server via said network.

It is to be understood that all the features described previously to characterize the server aspect of the invention may likewise be employed to characterize the user aspect of the invention, and vice versa.

The invention further relates to a server system for associating user interests with geographical areas, said server system comprising means for providing geographical area data to at least one user over a network, means for receiving from said user at least one geographical zone, said geographical zone defined or selected by said user from said geographical area data, means for receiving from said user interest data relating to said geographical zone, and means for associating said interest data with said geographical zone.

In a preferred embodiment, said server system may further comprise means for receiving from said user temporal data relating to said geographical zone and/or to said interest data, and means for associating said temporal data with said geographical zone and/or with said interest data.

The invention further relates to a client system for associating user interests with geographical areas, said client system comprising means for receiving geographical area data from a server over a network, means for defining at least one geographical zone from said geographical area data, means for providing said geographical zone to said server, means for associating interest data with said geographical zone, and means for providing said interest data to said server.

The invention likewise relates to a computer program product for storing computer-readable instructions, such that said computer program product, when read on said computer, implements on said computer a method with some or all of the features as described above.

### DESCRIPTION OF PREFERRED EMBODIMENTS

The features and numerous advantages of the present invention will be best understood from a detailed description of the preferred embodiments in conjunction with the accompanying drawings, in which:
FIGURE 1 illustrates a user-defined geographical zone according to an embodiment of the invention;
FIGURE 2 illustrates how a user may define a new geographical zone in a geographical area;
FIGURE 3 illustrates how the user may set and define parameters of the new zone defined in the embodiment according to FIGURE 2;
FIGURE 4 illustrates how the user may set the size of a new zone as defined in the embodiment of FIGURE 2;
FIGURE 5 illustrates how a user may define interests or points of interest for the geographical zone defined in the embodiment according to FIGURE 2;
FIGURE 6 illustrates how temporal information may be provided for the geographical zone defined in the embodiment of FIGURE 2;
FIGURE 7 illustrates how further locations may be added to a previously defined geographical zone according to an embodiment of the present invention;
FIGURE 8 illustrates options for displaying user-defined geographical zones according to an embodiment of the present invention;
FIGURE 9 illustrates how the user may be provided with geographical area information and updates according to an alternative embodiment of the present invention;
FIGURE 10 illustrates how geographical zones defined by a first user may be provided to a second user according to an embodiment of the present invention; and
FIGURE 11 schematically illustrates how the invention may be implemented on a mobile phone.

The invention will now be described for the specific example of a social network in which user may define maps or geographical zones both in space and in time. These zones may represent areas in the real world, such as parts of a city, or in a virtual world, such as in the setting of a network computer game.

The user may associate a special interest to the map or zone, and may further associate said special interest with a particular time parameter. The interest(s) attached to a zone may be a single interest, a plurality of interests or an interest tree comprising a hierarchical structure of interests. The interests may be interests that are shared by all members of a social network, or may be individual interests of that specific user.

The user may select said geographical zones in order to establish correlations with other users in the network, or to receive updates on services and activities pertaining to said geographical zones. Said geographical zones may thus allow a better targeting for location-based services.

Optionally, geographical zones may be active for a certain predetermined time span only. For instance, the user may select the time setting such that a given zone is active at regular intervals, such as every day from 1 p.m. to 5 p.m., only on Sundays, only from December to March, daily from 6 p.m. to 12 p.m., etc. Alternatively, the user may specify that a defined zone is active only once, such as on a predefined day or during a predefined week of the year.

Zones can be defined in any shape that the system allows to create. For instance, zones may be circles with a predefined radius around a predefined center. Zones can likewise be formed as a rectangle or a multi-edged polygon, or in any other shape, both with straight and curved boundary lines. A user may be allowed to add to or amend a previously defined zone at a later stage so as to transform it into the desired shape. The user may likewise add or delete further zones.

The user may be connected to a server and/or to other users via a network such as the Internet, or a part of the Internet establishing a closed or open social network. The server may be any conventional server or network computer. The user may employ any conventional client computer, such as a desktop computer or mobile computer, or any other computing and/or communication device, such as a mobile phone, a smart phone, or a tablet computer.

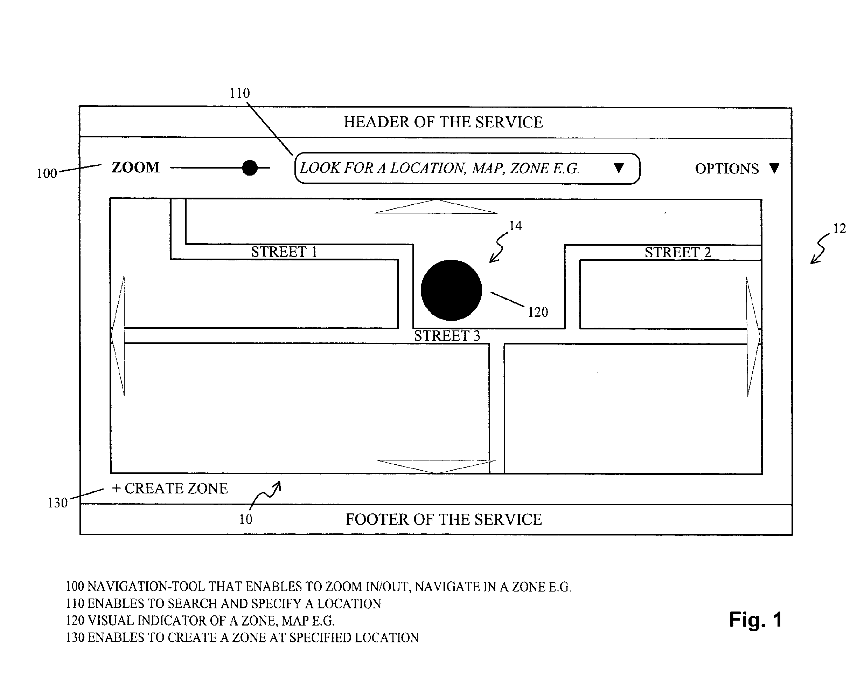

The server may provide the user with geographical area information such as a geographical map 10 or set of maps, which may be displayed on a display 12 such as a tablet display or mobile phone display, as shown in FIGURE 1. In the example displayed in FIGURE 1, the map 10 comprises a neighborhood or a plurality of streets in a city. However, any geographical map may be used. The visible indicator of a user-defined geographical zone 14 is shaded in black in FIGURE 1.

The user-defined geographical zone 14 may be defined by outlining a arbitrary region on the map 10, either in a free-hand fashion or by selecting among a plurality of predefined shapes, such as circles, rectangles, and multi-edged polygonal shapes.

A navigation tool may allow the user to zoom in and out of the map (100). The display likewise provides a search mask (110) that allows the user to search a location in the map and/or in said user-defined zone. A graphical icon (120) indicates a selected location on the map. This may be the current position of the user. Geographical coordinates of the user may for instance be obtained by employing a GPS-system or any other kind of localization system, as conventionally implemented in many mobile communication and computation devices. However, the graphical icon (120) may likewise denote some other predefined or selected location unrelated to the present location of the user.

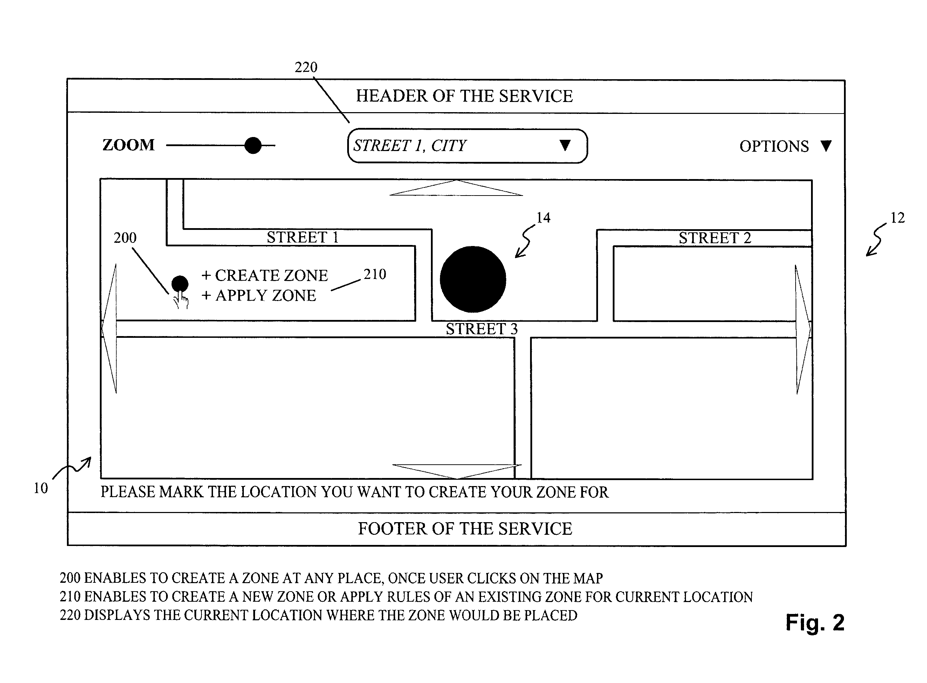

The map displayed in FIGURE 1 comprises a further icon 130 that allows to create a new geographical zone at a specified location, as further explained with reference to FIGURE 2.

The user may move the icon 130 anywhere on the map 10 and may then click on the map 10 to open a menu (200), where the user can either create a new zone or, alternatively, apply an existing zone to a new additional location (210). The screen may also display a geographical indication of the current location (such as a street name or name of an intersection) where the new zone would be placed or centered (220).

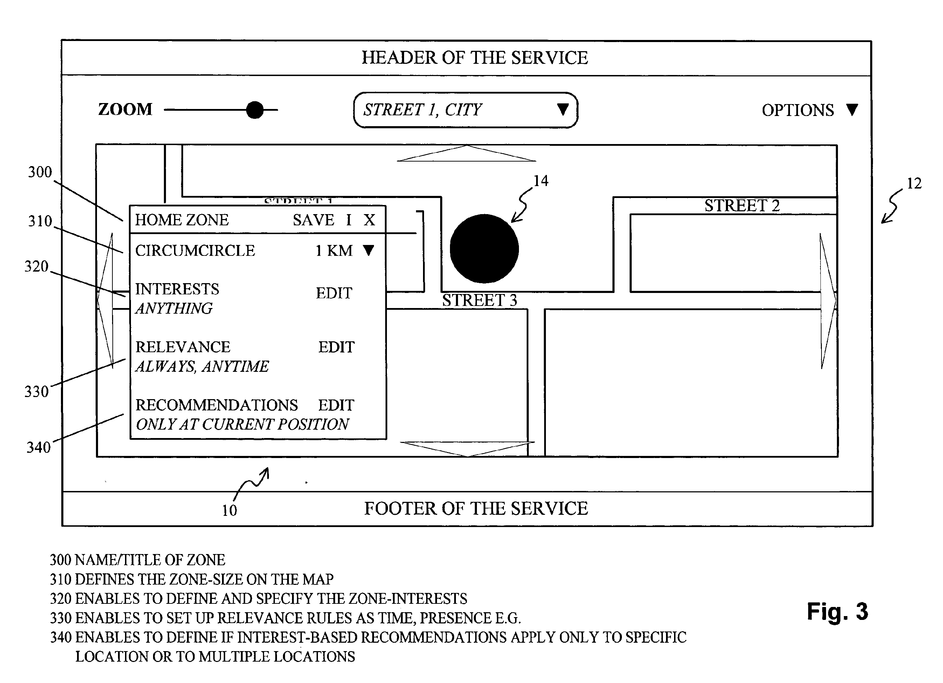

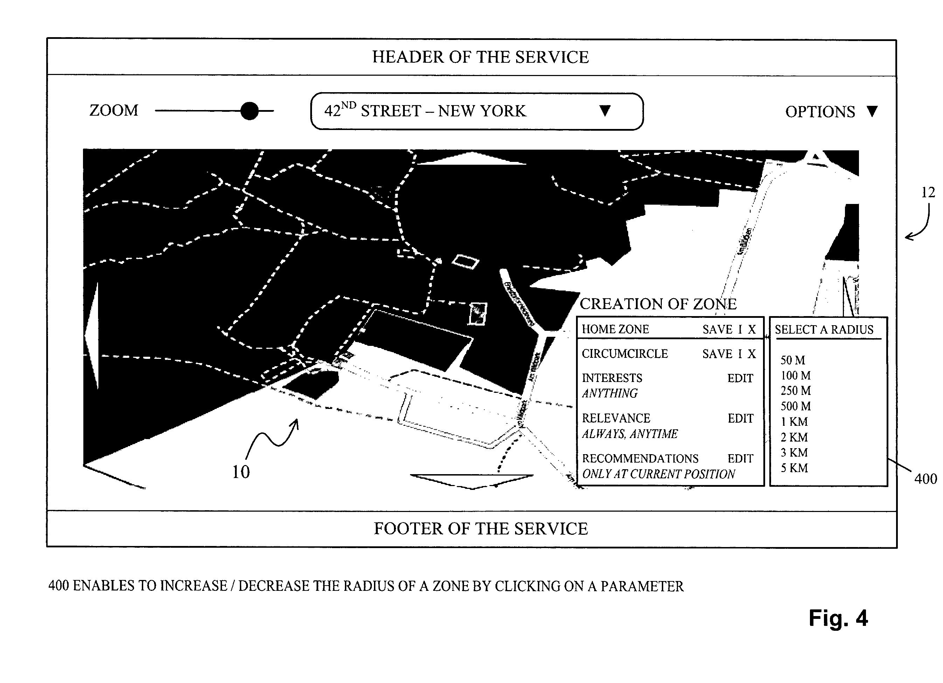

The user may specify a number of parameters in order to define a new zone, as illustrated in greater detail in FIGURE 3. For instance, the user may designate a name or title (300) for the new zone. The user may also define the size (310) of the zone. For instance, the zone may be defined in terms of a radius, such as a 1 kilometer radius, around a selected location on the map 10, as illustrated in further detail in FIGURE 4. The radius may be selected from among a predefined choice of radius values (400), or may be defined by the user.

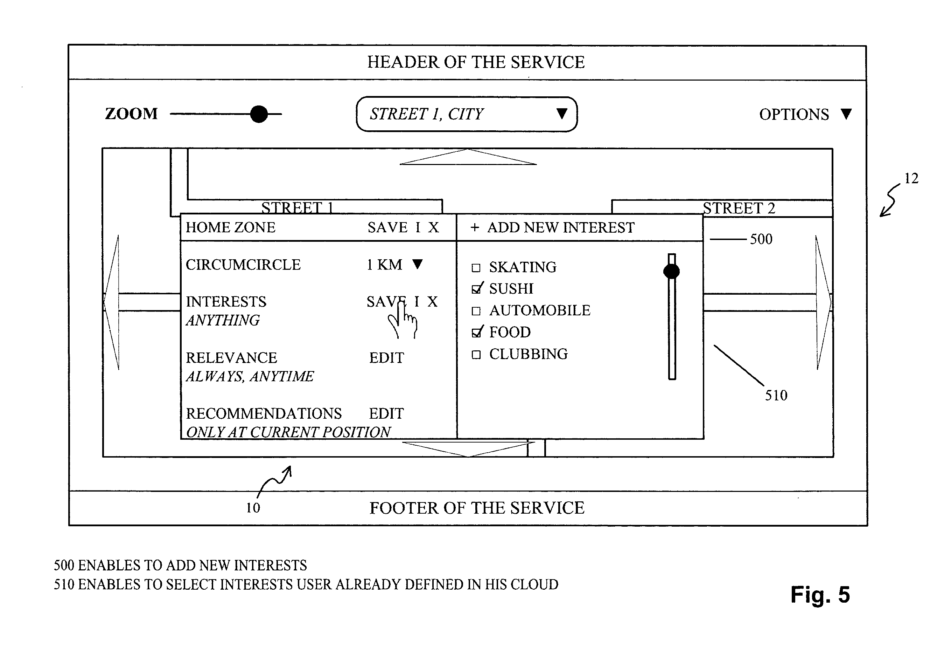

Returning to FIGURE 3, the user may designate at least one interest connected to the newly defined zone. This may be achieved by setting relevant filter values or by finding fitting items (320), as explained in further detail in FIGURE 5. The user may define one or more interests for the zone (500). He may select from a list of interests (510), which may be based on former input by the same user or based on recommendations provided by the server. Interests may relate to sports, restaurants, shopping, or any other kind of interests the user may want to associate with the new geographical zone.

Returning to FIGURE 3, the user may also decide when the newly defined zone should be used, for instance by designating the times when the zone should be active (330), and whether and when the zone should be used in combination with the user position (340).

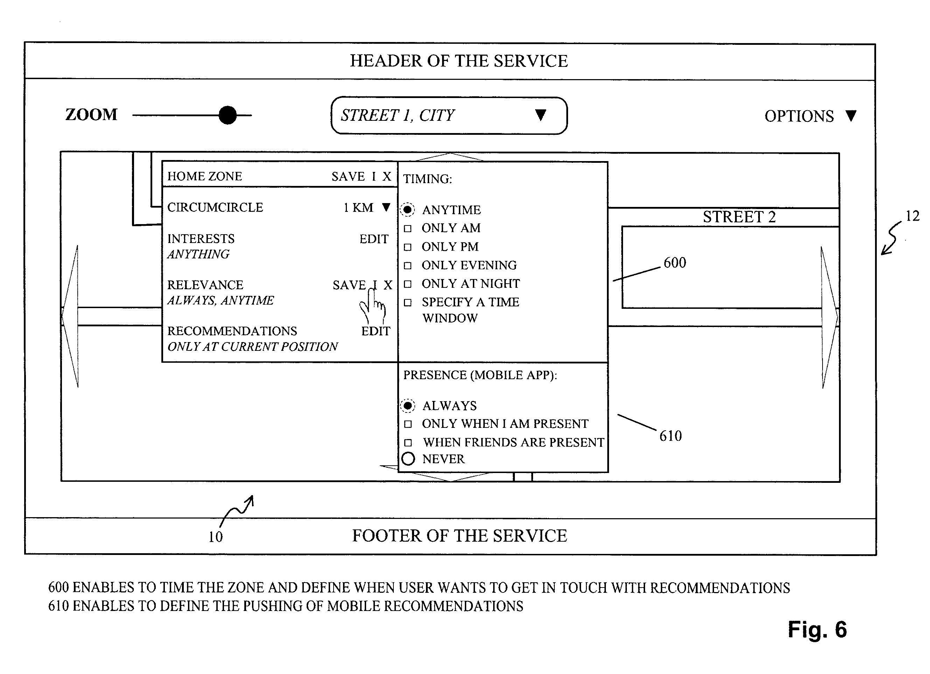

As explained in further detail with reference to FIGURE 6, certain geographical zones may be interesting for the user only at certain predefined times. This may be on a daily, weekly, monthly or other regular basis. For instance, if the zone is the user's home-zone and the user has designated an interest in food, he may select respective time windows when to be informed of restaurant updates, such as around noon and in the evening (600). However, the user may also specify zones that are active only at a given designated one time, for instance for the duration of a weekend or week. This may be useful if the user is on vacation, and the zone is a designated zone around his hotel.

As further explained with reference to FIGURE 6, the zone may be selected to be active only in connection with the user's presence in the zone (610). For instance, the position of the user may be tracked, and the zone may be activated only if a user approaches a boundary of the zone, or enters the zone, or is detected within the zone. Alternatively, the zone may be activated if the user is not in the zone, so that the user may receive updates while being away from the zone.

The zone might also be activated based on whether predefined other users are present in the zone, so that the user may be informed about the location of a friend or acquaintance in the zone.

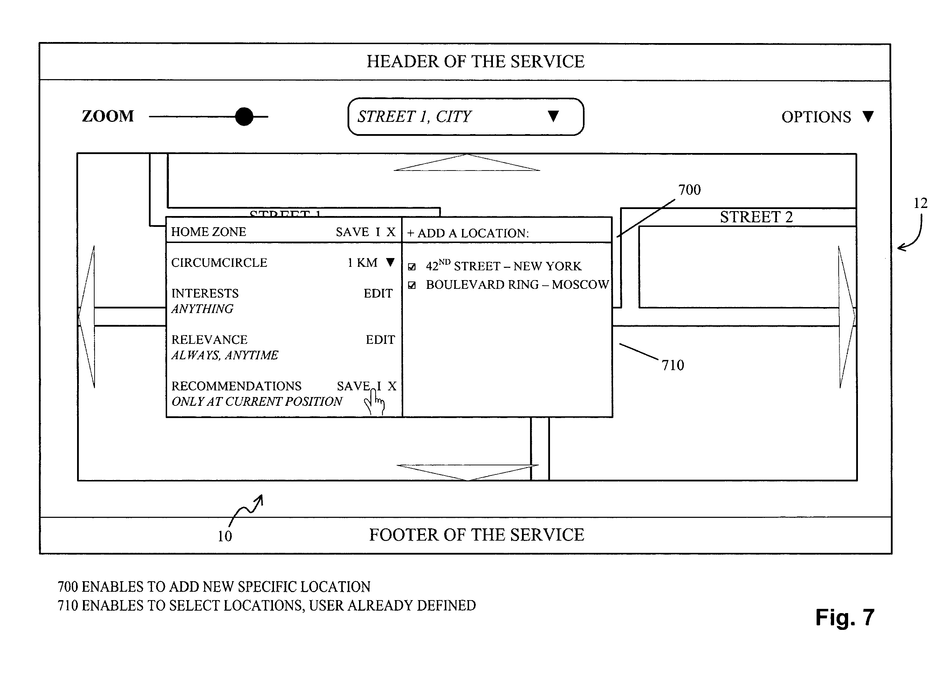

The user may further define points of interest in the zone, such as restaurants or shops in which he takes a particular interest. As explained with reference to FIGURE 7, a zone need not necessarily be simply connected, but may likewise be a combination of a plurality of sub-zones or locations. For instance, a zone can be defined as the plurality of all locations of a specific restaurant type or restaurant chain. As an example, five separate locations of such restaurants may be combined into a common zone.

To add another location to a zone (700), the user can either mark it on the map 10, or may specify the location by selecting the location from a list that may be provided by the server or may be pre-prepared by the user (710).

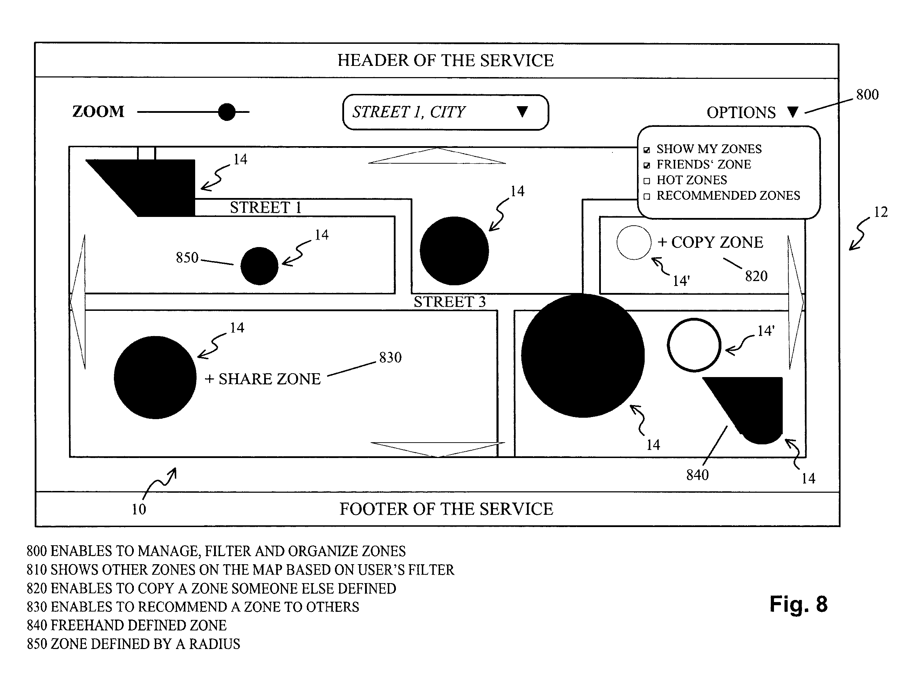

In general, any user may define a plurality of different zones. When employed in a network setting, the system according to the present invention may be adapted to display, on the user's computer display 12, zones defined by selected other users in the network, such as friends or acquaintances. All these further users may define their zones locally on their computer device. This information will then be provided to the central server, and can be distributed from there within the network. As illustrated in FIGURE 8, a button called "options" may allow the user to access a filter specifying which of the zones should be displayed (800). For instance, the user may choose to display only his own zones, or may choose to display some or all of the zones of selected other users of the network.

The user may likewise copy a zone 14' of another user to his own zones 14 (820). The user may also share and recommend one of his own zones 14 to other users (830). Zones 14, 14' may be defined in terms of a radius (850), as described above with reference to FIGURE 4, or may also be defined in a freehand fashion (840).

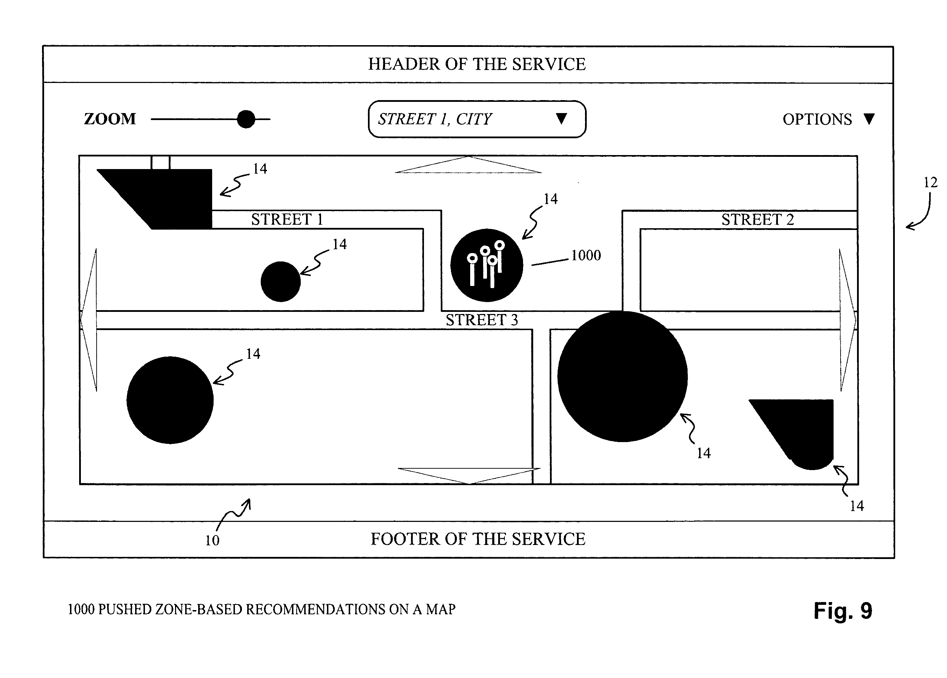

As shown in FIGURE 9, a user that receives a recommendation of a zone from another user will be provided with an icon (1000) designating information about the recommended zone, such as the number of locations in said zone or the geographical extension of said recommended zone.

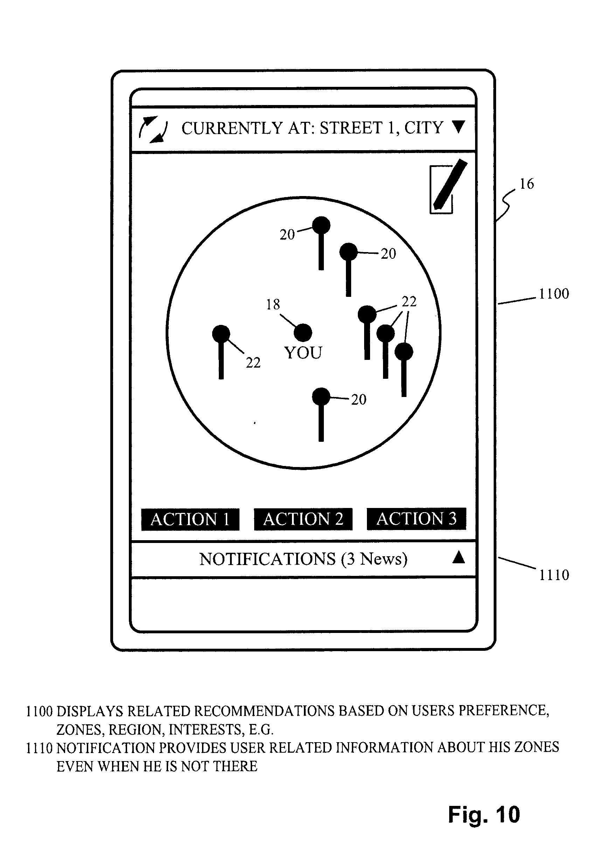

An implementation of the invention on a mobile telephone device 16 with a graphical display is illustrated in FIGURE 10. If the user has activated the GPS functionality on his mobile device 16, he can see on the display his own current location 18 together with his own zones 20 and recommended zones 22 in his immediate vicinity (1100). The user may also decide to request more information about a specific zone 20, 22, even though he may currently be at a different location (1100).

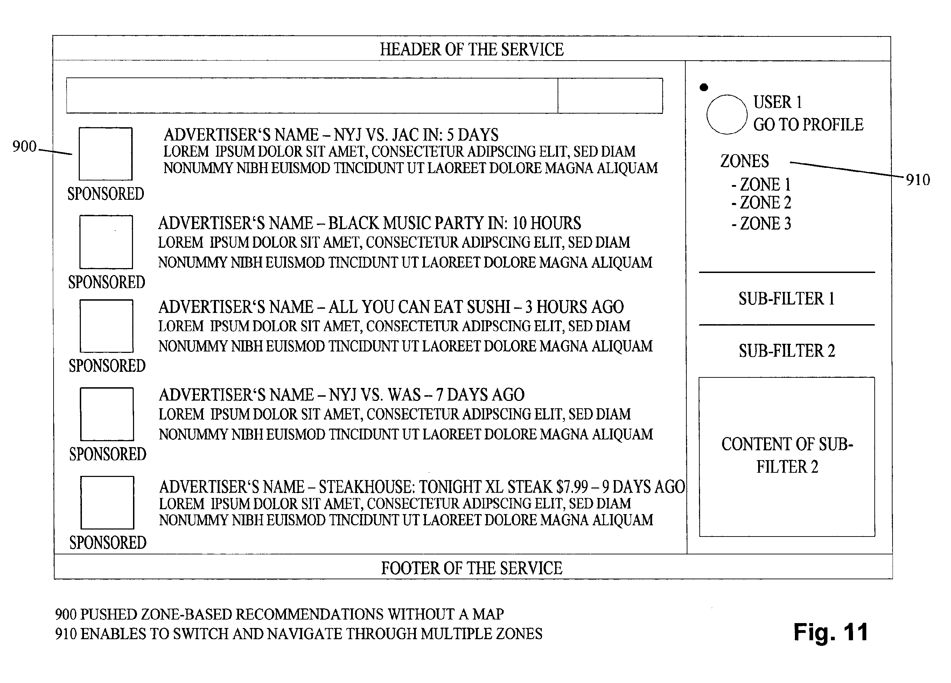

The present invention is particularly effective when the client system is adapted to display a graphical view of the geographical area information provided from the server, and of the geographical zones selected by the user. However, the invention is not so limited and may also be employed if the client's system does not support a map-based view. In this case, the user may define a geographical zone by providing a description of said zone, for instance by providing an address and specifying a circle of a predetermined radius around said location. Recommendations based on the interests defined by the user may then be displayed at the client's system as a list of recommendations (900), as shown in FIGURE 11. This list may be filtered by enabling and disabling the user zones (910).

The description of the preferred embodiments and the accompanying drawings merely serve to illustrate the invention and the beneficial effects associated therewith, but should not be understood to imply any limitation. The scope of the invention is to be determined solely based on the appended set of claims.

## Claims

1. A method for associating user interests with geographical areas, said method comprising the steps of:
providing geographical area data to at least one user over a network;
receiving from said user at least one geographical zone, said geographical zone defined or selected by said user from said geographical area data;
receiving from said user interest data relating to said geographical zone; and
associating said interest data with said geographical zone.

2. The method according to claim 1, wherein said geographical zone is defined by at least one circle and/or by at least one polygon and/or by a boundary line.

3. The method according to claim 1 or 2, wherein said geographical zone comprises a plurality of separate sub-zones.

4. The method according to one of the preceding claims, wherein said step of receiving said interest data comprises a step of receiving points of interest located in said geographical zone.

5. The method according to one of the preceding claims, further comprising a step of receiving from said user temporal data relating to said geographical zone and/or to said interest data, and associating said temporal data with said geographical zone and/or with said interest data, further comprising a step of activating or deactivating said geographical zone in accordance with said temporal data.

6. The method according to one of the preceding claims, further comprising a step of providing update data to said user, said update data relating to said interest data, wherein said update data is provided in accordance with temporal data and/or in accordance with a position of said user and/or a position of further users connected via said network.

7. The method according to one of the preceding claims, further comprising a step of communicating data relating to said geographical zone and/or relating to said interest data to at least a further user connected via said network.

8. The method according to one of the preceding claims, further comprising the steps of:
providing first geographical area data to a first user over said network;
receiving from said first user at least a first geographical zone, said first geographical zone defined or selected by said first user from said first geographical area data;
receiving from said first user first interest data relating to said first geographical zone;
associating said first interest data with said first geographical zone;
providing second geographical area data to a second user over said network;
receiving from said second user at least a second geographical zone, said second geographical zone defined or selected by said second user from said second geographical area data;
receiving from said second user second interest data relating to said second geographical zone;
associating said second interest data with said second geographical zone; and
providing said second user with data pertaining to said first geographical zone and/or said first interest data.

9. The method according to one of the preceding claims, wherein said network is a social network.

10. A method for associating user interests with geographical areas, said method comprising the steps of:
receiving geographical area data from a server over a network;
defining at least one geographical zone from said geographical area data;
providing said geographical zone to said server;
associating interest data with said geographical zone; and
providing said interest data to said server.

11. The method according to claim 10, wherein said step of associating said interest data comprises a step of defining and/or selecting points of interest in said geographical zone.

12. The method according to claim 10 or 11, further comprising a step of associating temporal data with said geographical zone and/or with said interest data, and/or a step of receiving update data from said server, said update data relating to said interest data, wherein said update data is received in accordance with temporal data and/or in accordance with a position of said user and/or a position of further users connected to said server via said network.

13. A server system for associating user interests with geographical areas, said server system comprising:
means for providing geographical area data to at least one user over a network;
means for receiving from said user at least one geographical zone, said geographical zone defined or selected by said user from said geographical area data;
means for receiving from said user interest data relating to said geographical zone; and
means for associating said interest data with said geographical zone.

14. The server system according to claim 13, further comprising means for receiving from said user temporal data relating to said geographical zone and/or to said interest data, and means for associating said temporal data with said geographical zone and/or with said interest data.

15. A client system for associating user interests with geographical areas, said client system comprising:
means for receiving geographical area data from a server over a network;
means for defining at least one geographical zone from said geographical area data;
means for providing said geographical zone to said server;
means for associating interest data with said geographical zone; and
means for providing said interest data to said server.
